# EUROPEAN PATENT SPECIFICATION

(11) **EP 0 294 338 B1**
(45) Date of publication and mention of the grant of the patent: **30.06.1993**
(21) Application number: 88830159.5
(22) Date of filing: 12.04.1988
(51) Int. Cl.: A47J 27/04, A47J 27/16

(54) **Equipment to heat foods disposed in low thermal conductivity containers**
Vorrichtung zum Aufwärmen von Nahrungsmitteln in Isolierbehältern
Appareil pour réchauffer des aliments dans des récipients isolants

(30) Priority: 08.05.1987 IT 291687
(43) Date of publication of application: 07.12.1988
(73) Proprietor: NORD CONTENITORI S.R.L., I-24040 Osio Sopra (Bergamo) (IT)
(72) Inventor: Bertoli, Edoardo, I-24044 Dalmine (BG) (IT)
(74) Representative: Righetti, Giuseppe

(56) References cited:
- EP-A- 0 122 233
- EP-A- 0 191 267
- DE-C- 342 930
- FR-A- 2 201 747

## Description

The present invention relates to an equipment to heat foods disposed in low thermal conductivity containers. In greater detail, the equipment of the invention can be used to carry out the heating of previously cooked foods which need to be transferred to collective refreshment places such as for example the canteens in factories, offices, schools, where the foods have to be eaten.

It is known that food requirements for communities in factories, offices, schools and so on are in many cases met by the creation of refreshment centers where there is the distribution of foods previously cooked and packaged in suitable cooking centers which engage themselves to daily supply said refreshment centers.

In order to avoid undesired bacterial proliferations in cooked foods it is necessary for them not to stay after cooking at temperatures ranging between 10 and 60°C. That is why the food distribution from the cooking centers to the refreshment centers has to be carried out by adopting suitable precautions.

Presently the distribution of foods can be substantially accomplished following three different methods.

In one method, commonly identified as "hot line" distribution, it is provided that foods, immediately after cooking, should be divided into single portions and disposed at the inside of low thermal conductivity containers adapted to restrict lowerings in temperature during the transport and wait time before being distributed to the final consumers.

It has however been ascertained that by adopting this method, when the foods reach the final consumer their temperatures are remarkably lower than the 60°C limit fixed by international rules. Actually it has been stated that the food has a temperature lower than 60°C already at the moment in which it is introduced into the low thermal conductivity container, since most of the heat the food possesses at the end of cooking is dissipated during the packaging operations. If the unavoidable dispersion of heat which, notwithstanding the use of low thermal conductivity containers, occurs during the transport and wait for distribution is added, one can easily understand that no food will reach the consumer in excellent conditions.

In a second method designated as "cold line" it is provided that foods after being cooked should be rapidly cooled up to a temperature of 4-5°C and packaged in low thermal conductivity containers to be afterwards distributed to the refreshment centers. Once they have reached the distribution centers said foods are withdrawn from the containers and heated by means of different kinds of ovens, until they reach the ideal temperature for being eaten. This method involves high costs originating from the equipment management and necessity of staff designed to heat the foods before their final distribution.

It is also to be pointed out that the foods during the heating, irrespective of the type of oven used, undergo some dehydration and as a result are subjected to organoleptic transformations modifying the flavour thereof.

In a third method designated as "frozen line", foods are provided to be brought after cooking to a temperature remarkably lower than 0°C to be afterwards brought to the suitable temperature for being eaten before being distributed to the final consumer.

This method substantially involves the same drawbacks as described with reference to the cold line distribution.

The main object of the present invention is to eliminate the above described prior problems by providing a process and an equipment which, irrespective of the method of distribution therein adopted, are capable of ensuring a good preservation state of the foods during their transport to the refreshment centers as well as the appropriate temperature and excellent organoleptic characteristics when they are served out to final consumers.

Another process for heating foods is described in document EP-A-122 223, which is considered to represent closest prior art. This patent refers to a process for heating foods held in a plurality of containers which are connected together by means of valves and tubes. One of these containers is connected to a steam source, the same container is provided at its bottom with an outer tube in order to collect the condenced steam. This process requires therefore the presence of a safety system to control the pressure inside the containers.

The foregoing and still further objects that will become more apparent in the course of the present description are substantially achieved by an equipment to heat foods disposed in low thermal conductivity containers; comprising the features of the characterizing portion of claim 1.

Further features and advantages are described in claims 2-9, and will be best understood from the detailed description of a preferred embodiment of an equipment to heat foods disposed in low thermal conductivity containers in accordance with the present invention. Said description will be given hereinafter by way of non-limiting example with reference to the accompanying drawings, in which:
- Fig. 1 is a front diagrammatic view of an equipment to heat foods in accordance with the present invention;
- Fig. 2 shows, on an enlarged scale with respect to Fig. 1, the steam production means associated with the equipment of the invention;
- Fig. 3 is a cross-sectional view to an enlarged scale taken along line III-III of Fig. 1, showing the low thermal conductivity container connected to the steam delivery duct;
- Fig. 4 is a perspective view of a low thermal conductivity container combined with the equipment of Fig. 1;
- Fig. 5 is an exploded perspective view of the container seen in Fig. 4;
- Fig. 6 is a perspective view of the side walls of the container seen in Fig. 4 where the walls are in a pack-folded condition;
- Fig. 7 is a partially exploded sectional view of the elements used to form the walls of the low thermal conductivity container.

Referring to the drawings, 1 globally denotes an equipment to heat foods disposed in low thermal conductivity containers, in accordance with the present invention.

The equipment 1 comprises a supporting frame 2 on which at least a supporting surface 3 for a low thermal conductivity container globally identified by reference numeral 4 is defined. Housed within the supporting frame 2 and underneath the supporting surface 3 there is a steam production means globally identified by 5, designed to the instantaneous production of steam to be sent into the container 4. The steam production means 5 comprises a vaporization unit 6 substantially consisting of a casing 7 defining a vaporisation chamber 7a and housing a first electrical resistor 8; water supply means 9 is connected to the bottom of said casing 7.

In the embodiment shown the water supply means 9 comprises a feeding line 10 connected to the waterworks and leading to a decalcification device 11 of the cationic resin type, which can be regenerated with kitchen-salt. A connecting duct 12 extends from the decalcification device 11 and leads to the vaporization unit 6, a delivery pump 13 being interposed therebetween.

The steam production means 5 further comprises an overheating unit 14 disposed above the vaporization unit 6 and under the supporting surface 3. The overheating unit 14, like the vaporization unit 6, substantially comprises a casing 15 defining an overheating chamber 15a and housing a second electrical resistor 16; it communicates with the vaporization chamber 7a through a flange joint 17. Preferably the flange joint 17 is formed in two halves 17a, 17b each integral to the vaporization unit 6 and overheating unit 14 respectively and detachably joined to each other by screw threaded members or the like.

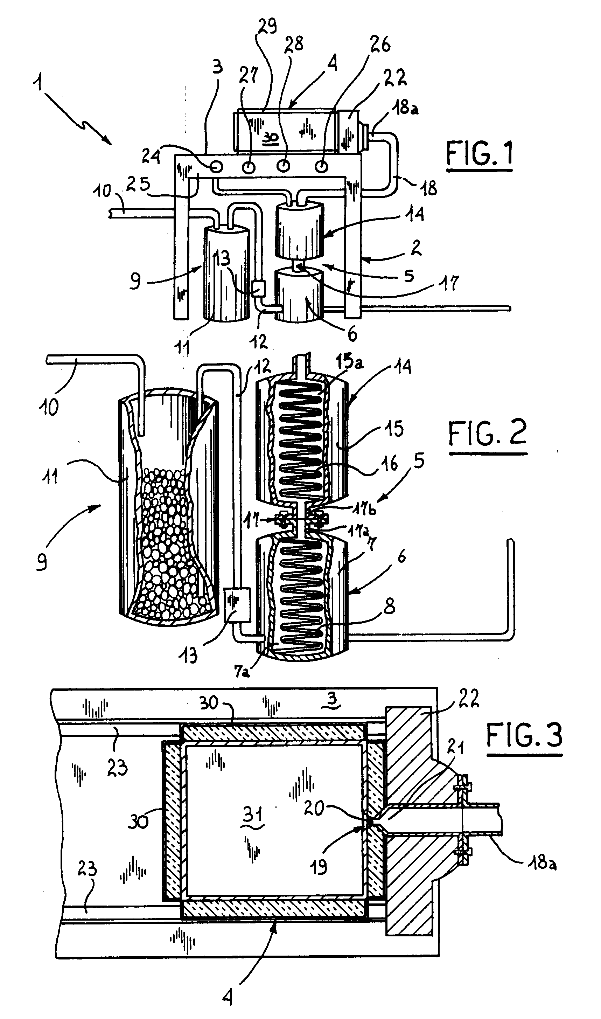

Referring particularly to Fig. 1, a delivery duct 18 extends from the top of the overheating unit 14 and an end portion thereof terminates at the supporting surface 3 and lends itself to be connected to the interior of the container 4 disposed on said supporting surface. In greater detail, the connection between the delivery duct 18 and container 4 is achieved by union means substantially consisting of a valve union means 19. The valve union means 19 comprises a single-acting inlet valve 20 located on a wall of the container 4 and a fit element 21 which is engaged with the delivery duct 18 and fixedly supported by a shoulder 22 integral to the supporting surface 3.

The fit element 21, substantially extending in a horizontal direction, operatively engages with the single-acting valve 20 when the container 4 is laid on surface 3 and pushed against shoulder 22. To facilitate the engagement between the fit element 21 and valve 20 a pair of parallel slides 23 may be provided on the supporting surface 3; their function is to slidably engage the container 4 in order to guide it during its displacement towards shoulder 22.

Advantageously slides 23 are elastically supported by the supporting surface 3 so that the engagement between the fit element 21 and valve 20 can be allowed also in the event of possible errors in the relative positioning of the same.

In accordance with the invention, the equipment 1 starts operating when, after it has been switched on by means of a main switch 24 located on the front board 25 of the supporting frame 2, a container 4 holding the foods to be heated is disposed on glides 23 and pushed against the shoulder 22 in order to be connected, through the valve union means 19, to the steam production means 9. When the container 4 abuts against shoulder 22, a microswitch not shown causes the operation of the delivery pump 13 which withdraws water from the decalcification device 11 and send it to the vaporization unit 6. The operation of the pump 13 lasts a predetermined period of time which is controlled by an adjustable timer operated by a knob 26 located on the front board 25.

As the water is sent to the casing 7 of the vaporization unit 6, it is immediately vaporized due to the effect of heat produced by the electrical resistor 8. The wet saturated steam thus produced tends to lift and therefore it reaches the overheating unit 14 through the flange joint 17. Under this situation heat produced by the second electrical resistor 18 causes the steam collected in unit 14 to be overheated so that its humidity rate remarkably decreases. The overheated steam thus produced runs through the delivery duct 18 and is sent through the valve union means 19, to the interior of container 4 in order to cause the appropriate heating of the foods disposed therein.

As can be easily understood, there is overheated steam flowing into the container 4 until the delivery pump 13 is deactivated by the action of timer 26. Two telltale lamps are respectively switched on when the entry of steam into the container 4 takes place and when the steam flow is stopped.

Advantageously, still in accordance with the present invention, it is provided that during the entry of overheated steam a constant pressure substantially equal to or slightly higher than the pressure of the surrounding atmosphere should be maintained in the container 4.
For the purpose container 4 is provided with a cover 29 merely resting on the edges of its side walls. In this way cover 29 can easily be raised from the container 4 as soon as steam entering it causes a slight increase in the inner pressure. Steam can therefore escape from the container so that it is possible to keep pressure and temperature inside it to a substantially constant value.

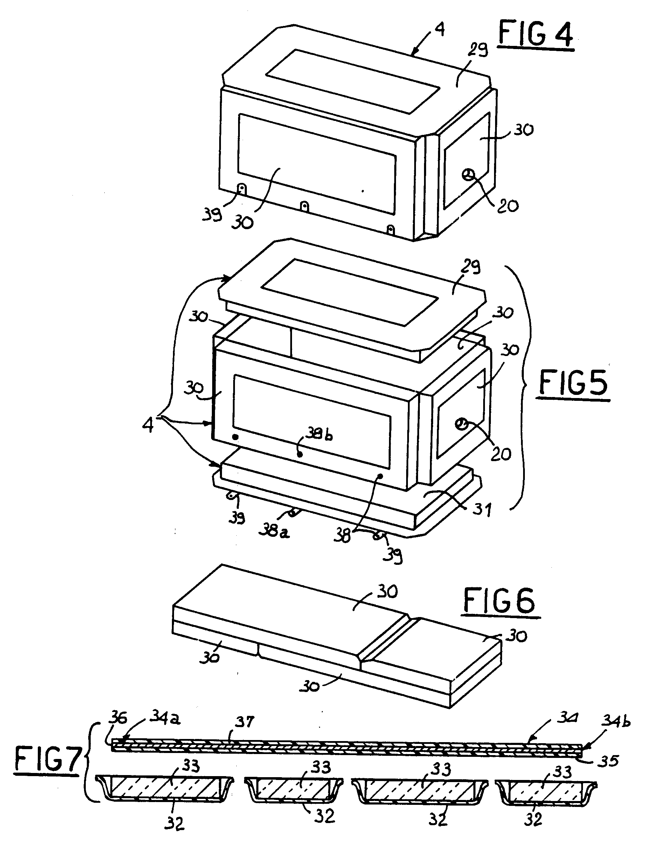

To ensure functionality of the cover on container 4 is is necessary that the latter, besides exhibiting characteristics of non-toxicity, a high thermal insulation, practicality in use, reduced weight and costs, should also be exempt from deformations by effect of the heat carried by steam penetrating thereinto. In order to meet the above listed requirements the four side walls 30 of container 4, as clearly seen in Fig. 5, must be accomplished separately from cover 29 and also from the bottom 31 of said container. As shown in Fig. 7, each wall 30 comprises a shaped element 32 made of polypropylene and substantially in the form of a rectangular tray, inside which a panel 33 made of thermally insulating material is disposed, such as for example polystyrene or polyurethane resin.

The four shaped elements 32 are consecutively joined to each other by a sheet 34 of great thickness heat sealed thereto. In greater detail, the sheet 34 is formed by consecutively superposing a layer of polyproplylene 35 facing the shaped elements 32, a layer of aluminium 36 and a layer of polyester resin 37 designed to face the inside of container 4. The layer of polyester resin 37 is transparent, so that the side walls 30 exhibit specular surfaces facing the container.

The opposite ends 34a, 34b of sheet 34 are put close to each other and joined together by heat sealing, so that all the side walls 30 appear connected to one another.

Advantageously, as clearly seen in Fig. 6, the side walls 30 can be pack-folded so that they appear superposed, which gives rise to a considerable reduction in bulkiness when the container has to be stowed or transported.

Cover 29 and bottom 30 are also made so that they have a low thermal conductivity as well,and they exhibit specular surfaces facing the inside of container 4. As all the inner surfaces of the container 4 are specular, there is a remarkable reduction in heat loss due to the radiations of the container itself.

As shown in Fig. 5, bottom 31 is detachably engageable to the side walls 30 by means of a number of snap fasteners 38 circumferentially distributed in the region of the lower edge of container 4. In greater detail, each snap fastener 38 consists of one half 38a fixed to a flexible tab 39 extending from the edge of bottom 31 and the other half 38b secured to the lower edge of the corresponding side wall 30.

A container 4 made as above described can be dismantled in order to reduce its bulkiness for stowing and afterwards easily mounted again by fastening the bottom 31 to the side walls 30 and placing the cover 29 thereon when the foods to be heated, distributed in singleportion vessels, have to be introduced into the container. Advantageously, above all when cold or frozen foods have to be heated, a cage-shaped element is preferably disposed at the inside of the container 4 for the purpose of supporting the single-portion vessels containing the foods and keeping them spaced apart from one another. As a result, it is possible to achieve an optimal distribution of steam in the container 4 since each food ration can present the respective surfaces completely in contact with steam and therefore have a rapid and homogeneous heating.

The present invention attains the intended purposes.

With reference to the "hot line" distribution of foods, the introduction of overheated steam into che container 4 immediately after the introduction of the foods allows the latter to be maintained to an optimal temperature, higher than 60°C, during the transport and wait time for distribution. Furthermore, said foods will have excellent temperature conditions even when they are distributed to the final consumers, being therefore eliminated all inconveniences caused in known art by the distribution of just warm foods and hence with less flavour and taste.

With reference to the "cold line" and "frozen line" distribution of foods, with the present invention it is possible to eliminate the use of ovens and of the manpower necessary to heat the foods. In fact the equipment and process of the invention allow the heating of foods to be carried out directly at the inside of the containers 4 used to transport them. In addition the use of steam to heat the foods eliminates all phenomena of dehydration connected with the use of conventional ovens, while maintaining the optimal organoleptic characteristics of the foods.

For example it is possible to provide a number of supporting surfaces 3 disposed above one another and designed to receive each a container 4 subjected to the introduction of steam through a respective delivery duct 18.

In place of the water supply means and vaporization unit it is also possible to provide the use of steam produced for different uses in the places where the equipment is employed. In this case steam is directly sent to the overheating unit and then to the container.

## Claims

1. An equipment to heat foods held in low thermal conductivity containers comprising :
- a supporting frame (2) on which at least a supporting surface (3) is defined;
- a container (4) being supported by said supporting surface (3), said container being provided with a cover (29);
- a vaporization unit (6) disposed underneath the supporting surface (3) and comprising a casing (7) defining a vaporization chamber (7a) and housing at least a first electrical resistor (8);
- an overheating unit (14) disposed above the vaporization unit (6) and comprising a casing (15) defining an overheating chamber (15a) communicating with the vaporization chamber (7a) and housing at least a second electrical resistor (16);
- at least a delivery duct (18) extending from the top of the overheating unit (14) and an end portion (18a) of which terminates in the region of the supporting surface (3);
- at least a valve union means (19) to connect the delivery duct (18) to the inside of the container (4) when the latter is positioned on the supporting surface (3);
- water supply means (9) to sent water to said vaporization chamber (7a);
- control means to operate said water supply means (9) when the container (4) is placed on the supporting surface (3) and connected to the delivery duct (18),
characterised by the fact that said cover (29) rests on the container (4) and is raised from the container when the steam is supplied to the container, whereby the steam, enters and escapes continuously from the container.

2. An equipment according to claim 1, characterized in that said container (4) comprises four side walls (30) formed with respective shaped elements (32) made of polypropylene and each housing at least a panel made of thermally insulating material, said elements being consecutively joined to each other by heat sealing a sheet (34) consisting of a layer of polypropylene (35) facing the shaped elements (32), a layer of aluminium (36) and a layer of transparent polyester resin (37) designed to face the inside of the container (4), the cover (29) being detachably engageable on the top of said side walls, said container also comprising a bottom (31) to be detachably engaged to the lower part of said side walls.

3. An equipment according to claim 2, characterized in that said cover (29) is only laid on the upper edges of the side walls (30).

4. An equipment according to claim 2, characterized in that said bottom (31) is detachably engaged with the lower edges of the side walls (30) by means of perimetrically distributed snap fasteners (38) each of them comprising one half (38a) fixed to a flexible tab (39) extending from the edge of the bottom (31) and the other half (38b) secured to the lower edge of the corresponding side wall (30).

5. An equipment according to claim 1, characterized in that disposed on the supporting surface (3) are parallel slides (23) designed to slidably engage and guide the container (4) to facilitate the connection between the delivery duct (18) and the valve union means (19).

6. An equipment according to claim 5, characterized in that said slides (23) are elastically engaged with the supporting surface (3).

7. An equipment according to claim 1, characterized in that said valve union means (19) comprises a fit element (21) engaged with the end portion (18a) of the delivery duct (18) and rigidly supported by a shoulder (22) secured to the supporting surface (3) and a single-acting valve (20) accomodated in one of the side walls (30) of the container (4) and adapted to be engaged to the fit element (21) when the container abuts against said shoulder (22).

8. An equipment according to claim 1, characterized in that said water supply means (9) comprises a feeding line (10) leading to a decalcification device (11), a connecting duct (12) extending from the decalcification device (11) to the vaporization unit (6) and a delivery pump (13) acting on the connecting duct (12).

9. An equipment according to claims 7 and 8, characterized in that said control means comprises a microswitch located in the region of the shoulder (22) to operate the delivery pump (13) when the container abuts against said shoulder and a timer (26) to stop the operation of the delivery pump (13) after a predetermined time from the operation of the microswitch.

## Patentansprüche

1. Vorrichtung zum Aufwärmen von Nahrungsmitteln in Isolierbehältern, umfassend:
- ein Traggestell (2), worauf wenigstens eine Auflageebene (3) definiert ist,
- einen Behälter (4), der von der o.e. Auflageebene getragen wird, wobei dieser Behälter mit einem Deckel (29) versehen ist,
- eine Verdampfungseinheit (6), die unterhalb der Auflageebene (3) liegt und ein Gefäßteil (7) umfaßt, welches einen Verdampfunsraum (7a) definiert und wenigsens einen ersten elektrischen Widerstand unterbringt,
- eine oberhalb der Verdampfungseinheit (6) angeordnete überhitzungseinheit (6), die ein Gefäßteil (7) umfaßt, welches einen mit der Verdampfungsungseinheit (15a) verbundenen überhitzungsraum (15a) definiert und wenigstens einen zweiten elektrischen Widerstand (16) unterbringt,
- wenigstens eine Zuführungsleitung (18), die sich vom Gipfel der überhitzungseinehit (14) aus erstreckt und deren ein Endteil (18a) ins Gebiet der Auflageebene (3) mündet,
- wenigstens ein Ventilverbindungsmittel zum Verbinden der Zuführungsleitung (18) mit der Innenseite des Behälters (4), als dieses auf der Aulageebene (3) positioniert ist,
- Wasserspeisemittel (9) zur Zuführung von Wasser in den o.e. Verdampfungsraum (7a),
- Steuermittel zur Betätigung der o.e. Wasserspeisemittel (9), als der Behälter (4) auf der Auflageebene (3) liegt und mit der Zuführungsleitung (18) in Verbindung steht,
dadurch gekennzeichnet, daß der o.e. Deckel (29) am Behälter (4) anliegt und vom Behälter aus beim Zuführen des Dampfes in den Behälter aufgehoben wird, wobei der Dampf unaufhörlich in den Behälter hineindringt und daraus austritt.

2. Vorrichtung nach Anspruch 1, dadurch gekennzeichnet, daß der o.e. Behälter (4) vier durch jeweilige Formteile (32) aus Polypropylen gebildete Seitenwände (30) umfaßt, die jeweils wenigstens eine Tafel aus Wärmeisoliermaterial unterbringen, wobei die o.e. Formteile aufeinander folgend miteinander durch ein warmfestes Blatt (34) zusammengefügt sind, welches aus einer den Formteilen (32) gegenüberliegenden Polypropylenschicht (35), einer Aluminiumschicht (36) und einer Schicht (37) aus durchsichtichem Propylenharz besteht, die der Innenseite des Behälters (4) gegenüberzuliegen hat, wobei der Deckel (29) an den Gipfel der o.e. Seitenwände lösbar eingreifen kann und der o.e. Behälter ferner einen Boden (31) umfaßt, der ans Unterteil der o.e. Seitenwände lösbar einzugreifen hat.

3. Vorrichtung nach Anspruch 2, dadurch gekennzeichnet, daß der o.e. Deckel (29) auf den Obenrändern der o.e. Wände (30) lediglich aufliegt.

4. Vorrichtung nach Anspruch 1, dadurch gekennzeichnet, daß der o.e. Boden (31) in die Unterränder der Seitenwände (30) mittels längs des Umfangs verteilter Druckknöpfe (38) lösbar eingreift, welche je ein Halbteil (38a) - das an einer sich vom Bodenrand aus erstreckenden biegsamen Feder (39) befestigt ist - und das andere Halbteil (38b) aufweisen, das am Unterrand der jeweiligen Seitenwand (30) befestigt ist.

5. Vorrichtung nach Anspruch 1, dadurch gekennzeichnet, daß - am Auflageebene angeordnet - parallele Führungen (23) bestehen, die zum verschiebbaren Greifen und Führen des Behälters (4) dienen, um die Verbindung zwischen dar Zuführungsleitung (18) und den Ventilverbindungsmitteln (19) zu erleichtern.

6. Vorrichtung nach Anspruch 5, dadurch gekennzeichnet, daß die o.e. Führungen (23) an der Auflageebene (3) elastisch befestigt sind.

7. Vorrichtung nach Anspruch 1, dadurch gekennzeichnet, daß die o.e. Ventilverbindungsmittel (19) ein Einschaltelement (21) - das am Endteil (18a) der Zuführungsleitung (18) befestigt und durch eine an der Auflageebene (3) befestigte Schulter (22) fest gestützt ist - sowie ein Sperrventil (20) umfassen, das in einer der Seitenwände (30) des Behälters (4) gelagert ist, und sich für das Eingreifen in das Einschaltelement (21) beim Anliegen des Behälters an der o.e. Schulter (22) eignet.

8. Vorrichtung nach Anspruch 1, dadurch gekennzeichnet, daß das o.e. Wasserspeisemittel (9) eine Speiseleitung (10) umfaßt, die zu einer Entkalkungseinrichtung (11) führt, wobei sich eine Verbindungsleitung (12) von der Entkalkungseinrichtung (11) bis zur Verdampfungseinheit (6) erstreckt und eine Zuführungspumpe (12) auf die Verbindungsleitung (12) wirkt.

9. Vorrichtung nach Anspruch 7 und 8, dadurch gekennzeichnet, daß die o.e. Steuermittel einen Mikroschalter - der im Gebiet der Schulter 22 zur Betätigung der Zuführungspumpe (13) beim Anliegen des Behälters an der o.e. Schulter angeordnet ist - wie auch einen Zeitgeber (26) zum Betriebsausschalten der Zuführungspumpe (13) nach einer vorbestimmten Zeit ab der Zeitgeberbetätigung umfassen.

## Revendications

1. Appareil pour réchauffer des aliments disposés dans des récipients isolants, comprenant:
- un bâti de support (2) sur lequel est définie au moins une surface de support (3);
- un récipient (4) qui est supporté par ladite surface de support (3), ledit récipient étant pourvu d'un couvercle (29);
- une unité de vaporisation (6) disposée au-dessous de la surface de support (3) et comprenant une enceinte (7) définissant une chambre de vaporisation (7a) et logeant au moins une première résistance électrique (8);
- une unité de surchauffage (14) disposée au-dessus de l'unité de vaporisation (6) et comprenant une enceinte (15) définissant une chambre de surchauffage (15a) mise en communication avec la chambre de vaporisation (7a) et logeant au moins une second résistance électrique (16);
- au moins un conduit de refoulement (18) s'étendant du sommet de l unité de surchauffage (14) et dont une portion d'extrémité (18a) se termine dans la zone de la surface de support (3);
- au moins des moyens de raccordement de valve (19) destinés à relier le conduit de refoulement (18) avec l'intérieur du récipient (4) quand ce dernier est positionné sur la surface de support (3);
- des moyens (9) d'amenée d'eau pour envoyer de l'eau à ladite chambre de vaporisation (7a);
- des moyens de commande pour l'actionnement desdits moyens d'amenée d'eau (9) quand le récipient (4) est mis sur la surface de support (3) et est relié au conduit de refoulement (18),
caractérisé en ce que ledit couvercle (29) prend appui sur le récipient (4) et est soulevé du récipient quand de la vapeur est envoyée dans le récipient, de manière que la vapeur entre dans le récipient et en sort en continu.

2. Appareil selon la revendication 1, caractérisé en ce que ledit récipient (4) comporte quatre parois latérales (30) formées de respectifs éléments profilés (32) en polypropylène, chacune desquelles loge au moins un panneau en matière thermiquement isolante, lesdits éléments étant unis entre eux de manière consécutive par thermosoudage d'une feuille (34) comportant une couche de polypropylène (35) disposée en regard des éléments profilés (32), une couche d'aluminium (36) et une couche de résine de polyester transparente (37) orientée vers la partie intérieure du récipient (4), le couvercle (29) pouvant s'engager de manière amovible à la partie supérieure desdites parois latérales, ledit récipient comportant également un fond (31) destiné a s'engager de manière amovible a la partie inférieure desdites parois latérales.

3. Appareil selon la revendication 2, caractérisé en ce que ledit couvercle (29) repose tout simplement sur les bords supérieurs des parois latérales (30).

4. Appareil selon la revendication 2, caractérisé en ce que ledit fond (31) est engagé de manière amovible aux bords inférieurs des parois latérales (30) au moyens de boutons à pression (38) distribués sur toute la circonférence et chacun desquels comporte une moitié (38a) fixée à une patte souple (39) s'étendant du bord du fond (31) et l'autre moitié (38b) fixée au bord inférieur de la paroi latérale correspondante (30).

5. Appareil selon la revendication 1, caractérisé en ce que des glissières parallèles sont disposées sur la surface de support (3), ces glissières étant destinées à engager à coulissement et à guider le récipient (4) dans le but de faciliter la liaison entre le conduit de refoulement (18) et les moyens de raccordement de valve (19).

6. Appareil selon la revendication 5, caractérisé en ce que lesdites glissières (23) sont engagées élastiquement à la surface de support (3).

7. Appareil selon la revendication 1, caractérisé en ce que lesdits moyens de raccordement de valve (19) comportent un élément de jonction (21) engagé à la portion d'extrémité (18a) du conduit de refoulement (18) et supporté rigidement par un épaulement (22) fixé à la surface de support (3) et une soupape à simple effet (20) logée dans une des parois latérales (30) du récipient (4) et susceptible d'engagement avec l'élément de jonction (21) quand le récipient vient buter contre ledit épaulement (22).

8. Appareil selon la revendication 1, caractérisé en ce que lesdits moyens d'amenée d'eau (9) comportent un tuyau d'alimentation (10) aboutissant dans un dispositif de décalcification (11), un conduit de liaison (12) s'étendant depuis le dispositif de décalcification (11) jusqu'à l'unité de vaporisation (6) et une pompe de refoulement (13) agissant sur le conduit de liaison (12).

9. Appareil selon les revendications 7 et 8, caractérisé en ce que lesdits moyens de commande comportent un microinterrupteur situé à proximité dudit épaulement (22) et destiné à actionner la pompe de refoulement (13) quand le récipient vient buter contre ledit épaulement et une minuterie (26) pour arrêter le fonctionnement de la pompe de refoulement (13) après une période de temps prédéterminée à partir de l'actionnement du microinterrupteur.
